# EUROPÄISCHE PATENTANMELDUNG

(11) **EP 2 602 518 A1**
(43) Veröffentlichungstag der Anmeldung: **12.06.2013**
(21) Anmeldenummer: 12401213.9
(22) Anmeldetag: 25.10.2012
(51) Int. Cl.: F16K 15/04, F16K 27/02, G01N 30/36, F16K 25/00

(54) **Schaltventil, insbesondere für das Schalten eines unter hohem Druck stehenden Fluids**

(30) Priorität: 06.12.2011 DE 102011056094
(71) Anmelder: Dionex Softron GmbH, 82110 Germering (DE)
(72) Erfinder: Häckel, Dr., Michael, 82110 Germering (DE); Schloderer, Dr., Richard, 82152 Krailling (DE)
(74) Vertreter: Eder, Thomas

(57) **Zusammenfassung**

Die Erfindung betrifft ein Schaltventil, insbesondere für das Schalten eines unter hohem Druck stehenden Fluids, mit wenigstens einer Ventileinheit (11, 13), welche ein Ventilsitzelement (17) und ein in einem Führungselement (23) beweglich geführtes Schaltelement (19) umfasst, wobei das Ventilsitzelement (17) und das Schaltelement (19) zur Realisierung einer Schaltventilfunktion zusammenwirken, wobei das Ventilsitzelement (17) und das Führungselement (23) in einem Gehäuse (3) vorgesehen sind und wobei das Ventilsitzelement (17), das Führungselement (23) und das Gehäuse (3) einen Durchflusskanal (15) für das zu schaltende Fluid bilden. Erfindungsgemäß ist in einem allseitig geschlossenen Raum zwischen der Innenwandung des Gehäuses (3) und den Außenwandungen des Ventilsitzelements (17) und des Führungselements (23) ein elastisch und/oder plastisch verformbarer Dichtkörper (27) vorgesehen, welcher unter einem vorbestimmten Druck steht und so den Durchflusskanal (15) gegenüber dem Gehäuse (5) abdichtet und das Ventilsitzelement (17) und das Führungselement (23) mit einer einwärts gerichteten Vorspannung beaufschlagt.

## Beschreibung

Die Erfindung betrifft ein Schaltventil, insbesondere für das Schalten eines unter hohem Druck stehenden Fluids, mit den Merkmalen des Oberbegriffs des Patentanspruchs 1.

In der Flüssigkeitschromatographie, insbesondere der Hochleistungsflüssigkeitschromatographie (HPLC), werden Substanzen getrennt, indem sie mit hohem Druck mit Hilfe eines Lösungsmittels durch eine Chromatographie-Säule gespült werden. Zur Erzeugung des hierfür erforderlichen Flüssigkeitsstroms werden Pumpen benötigt, die in der Lage sind, bei hohem Druck kontinuierlich eine üblicherweise sehr kleine, konstante Flussrate zu liefern. Um in der HPLC schnellere oder besser aufgelöste Trennungen zu erreichen, werden in den letzten Jahren immer noch höhere Drücke verwendet.

Zum Erzeugen des Flüssigkeitsdrucks werden in der HPLC üblicherweise Kolbenpumpen eingesetzt. Diese Pumpen verwenden am Einlass und am Auslass in der Regel passive Rückschlagventile, die meist als Kugelventile ausgebildet sind. Derartige Rückschlagventile schalten abhängig von der Richtung der anliegenden Druckdifferenz des zu kontrollierenden Fluidstroms, welche über das Ventil (bzw. das betreffende Schaltelement) anliegt, bzw. abhängig von der Richtung des Fluidstroms durch den Durchflusskanal des Ventils von einem GESPERRT-Zustand in einen GEÖFFNET-Zustand bzw. umgekehrt. Die Ventile enthalten jeweils einen Ventilsitz, ein als Kugel ausgebildetes Schaltelement und ein Führungselement zur Führung der Schaltbewegung des Schaltelements. Das Ventilsitzelement und das Schaltelement müssen jeweils aus einem sehr harten und dennoch widerstandsfähigem Material bestehen, um für die zu schaltenden hohen Drücke im GESPERRT-Zustand eine ausreichend hohe Flächenpressung zu erlauben. Das als Kugel ausgebildete Schaltelement besteht dabei häufig aus Rubin und der Ventilsitz aus Saphir. Jedoch eignen sich beispielsweise auch keramische Materialien wie AlO₂ oder ZrO₂ zur Herstellung dieser Elemente. Diese Materialien haben den Vorteil, dass sie sehr hart und druckfest sind. Dies ist erforderlich, weil im Bereich der Dichtfläche, d.h. der Kontaktfläche zwischen dem Ventilsitzelement und dem Schaltelement lokal extrem hohe Drücke auftreten, die ein Vielfaches des Flüssigkeitsdrucks betragen können.

Um die Zuverlässigkeit eines solchen Rückschlagventils zu erhöhen, können zwei (oder gar mehrere) vollwertige Ventile bzw. Ventileinheiten, die in einem gemeinsamen Gehäuse angeordnet sind, zu einem Doppelrückschlagventil hintereinander geschaltet werden. Dadurch ist es für die korrekte Funktion ausreichend, wenn eines der beiden Ventile bzw. eine der beiden Ventileinheiten noch intakt, insbesondere im GESPERRT-Zustand dicht ist.

Für eine korrekte Funktion eines Rückschlagventils ist es nötig, die Elemente einer Ventileinheit, also insbesondere das Ventilsitzelement und das in einem Führungselement beweglich geführte Schaltelement derart abzudichten, dass im GESPERRT-Zustand keinerlei Flüssigkeit durch Undichtigkeiten durch das Rückschlagventil bzw. die betreffende Ventileinheit hindurchtreten kann. Hierzu müssen die einzelnen Komponenten des Ventils gegeneinander und gegenüber dem diese aufnehmenden Gehäuse abgedichtet werden. Diese Abdichtung muss einer Wechselbelastung bis zum Maximaldruck der Pumpe dauerhaft standhalten.

Rubin, Saphir und Keramik sind zwar sehr druckfest, halten aber nur einer vergleichsweise niedrigen Zugbeanspruchung stand. Da das Ventilsitzelement und auch das Führungselement für das Schaltelement üblicherweise eine (meist axiale) Öffnung für den Durchtritt des zu schaltenden Fluidstroms aufweisen, und demzufolge der Fluiddruck auf die Innenwandungen dieser Elemente wirkt, entstehen bei einer Verformung der Wandungen dieser Elemente (vornehmlich azimutale bzw. tangentiale) Zugspannungen, die einen Bruch des Materials verursachen können. Auch der Druck der Kugel auf den Ventilsitz, welcher durch eine schräg zur Achse der Durchgangsöffnung für das Fluid verlaufende Anlagefläche für das Schaltelement bzw. die Kugel gebildet ist, kann durch die resultierenden (überwiegend azimutalen) Zugspannungen zum Bruch des Sitzelements führen.

Bei bekannten Rückschlagventilen sind für das Abdichten der Komponenten gegeneinander bzw. gegenüber dem Gehäuse (in anderen Worten, das Abdichten des durch die Komponenten definierten Durchflusskanals) verschiedene Möglichkeiten bekannt.

In der Regel werden alle Komponenten einer Ventileinheit, insbesondere das Ventilsitzelement und das Führungselement zusammen mit dem darin aufgenommenen Schaltelement, in eine Metallhülse eingebaut. An den beiden Enden der Hülse werden Deckel aus PEEK zur Abdichtung der gesamten Einheit verwendet. In der Metallhülse können auch zwei Ventileinheiten angeordnet sein, wobei es in diesem Fall bekannt ist, zwischen den beiden Ventileinheiten des Doppelrückschlagventils eine weitere dünne Dichtscheibe aus PEEK zu verwenden. Dieses Design ist bis zu Druckwerten von ca. 1000 bar zuverlässig. Bei höheren Drücken besteht jedoch das Problem, dass sich die Deckel bei einem Dauereinsatz zu stark plastisch verformen und mit der Zeit undicht werden.

Eine andere Möglichkeit besteht darin, auch an den Enden dünne PEEK-Scheiben oder Metallscheiben zu verwenden, wie dies bei den in der EP 1 514 027 B1 dargestellten Ventilen der Fall ist. Mit solchen Scheiben ist jedoch nur ein stirnseitiges Abdichten möglich, was bei einem Doppelkugelventil eine aufwändige Konstruktion erfordert. Zudem werden hohe Anforderungen an die Qualität und die Struktur der Oberfläche gestellt. In der EP 1 514 027 B1 werden beispielsweise konzentrische Rillen vorgeschlagen.

Für das Problem der begrenzten Stabilität von Sitz und Führungselement infolge des Auftretens von Zugspannungen ist es bekannt, die Kontaktfläche zwischen dem Ventilsitz und dem Führungselement in Form einer Kugel kontrolliert undicht zu gestalten, um einen Druckausgleich zwischen innen und außen zu ermöglichen. Zwischen den beiden Einzelventilen des Doppelkugelventils muss dann so gedichtet werden, dass dieser Bereich auch gegenüber der Hülse dicht ist.

Es ist des Weiteren bekannt, die Ventilsitzelemente in einen Metallring einzupressen und dadurch radial einwärts gerichtet vorzuspannen. Der Nachteil dieser Variante besteht in dem damit verbundenen zusätzlichen Fertigungsaufwand.

Schließlich besteht die Möglichkeit, das Führungselement für das Schaltelement nicht aus Keramik, sondern aus Edelstahl zu fertigen, welcher eine höhere Zugfestigkeit aufweist. Das Stabilitätsproblem des Ventilsitzelements kann jedoch auf diese Weise nicht gelöst werden, da Edelstahl für den Ventilsitz (und auch für das Schaltelement) kein geeignetes Material ist.

Aus der US 2011/0094954 A1 ist es bekannt, die Ventilsitze am äußeren Umfang konisch zu gestalten und durch komplementäre Gegenstücke in axialer Richtung vorzuspannen. Hierdurch wird auch eine Vorspannung mit radial einwärts gerichteter Komponente erzeugt, die in der Lage ist, einen Teil der durch den Fluiddruck erzeugten Aufweitung des ringförmigen Sitzelements abzufangen. Allerdings erfordert diese Variante einen erhöhten Fertigungsaufwand und eine erhöhte Anzahl von Bauteilen mit komplexen Konturen, insbesondere bei einem Doppelkugelventil.

Ausgehend von diesem Stand der Technik liegt der Erfindung die Aufgabe zugrunde, ein Schaltventil, insbesondere für das Schalten eines unter hohem Druck stehenden Fluids, zu schaffen, das eine einfache Konstruktion und eine geringe Anzahl von Bauteilen aufweist und das auch bei extrem hohen Drücken eine hohe Standzeit bzw. Schaltfestigkeit und eine hohe Zuverlässigkeit und Dichtigkeit gewährleistet.

Die Erfindung löst diese Aufgabe mit den Merkmalen des Patentanspruchs 1.

Die Erfindung geht von der Erkenntnis aus, dass das Vorsehen eines elastisch und/oder plastisch verformbaren Dichtkörpers in einem allseitig geschlossenen Raum, welcher um die Ventileinheit vorgesehen ist, die Komponenten der Ventileinheit gegeneinander und gegenüber dem Gehäuse, in welchem die Ventileinheit aufgenommen ist, auf äußerst einfache Weise dadurch abgedichtet werden können, wenn der Dichtkörper in dem allseitig geschlossenen Raum unter einen vorbestimmten Druck gesetzt wird. Hierdurch wird der Dichtkörper verformt und fliest in jede kleine zu verschließende Öffnung. Selbstverständlich wird hierzu das Material des Dichtkörpers so gewählt, dass es eine ausreichende strukturelle Festigkeit besitzt um nicht selbst durch die abzudichtenden kleinen Öffnungen hindurch zu fließen und sich dabei vom Körper abzulösen, so dass dieser zerstört und letztlich auch der Druck in dem allseitig geschlossenen Raum durch Materialverlust reduziert würde. Die maximal zulässige Größe der abzudichtenden Stellen des allseitig geschlossenen Raums müssen selbstverständlich auf das Material des Dichtkörpers abgestimmt sein bzw. umgekehrt das Material auf die Größe der abzudichtenden Stellen.

Gleichzeitig ermöglicht der unter Druck stehende Dichtkörper eine radiale einwärts gerichtete Vorspannung der umschlossenen Komponenten der Ventileinheit, insbesondere des Ventilsitzelements, aber auch des Führungselements für das Schaltelement. Der Dichtkörper fungiert in dieser Hinsicht quasi als Festkörper-Hydraulikmedium, welches bei der Montage an einer beliebigen Stelle so beaufschlagt werden kann, dass sich im Volumen des Dichtkörpers ein annähernd gleicher Druck ausbildet, der die Außenwandungen der umschlossenen Komponenten der Ventileinheit beaufschlagt. Wegen der Kompressibilität des Materials des Dichtkörpers und dem Vorhandensein von kleinen Spalten zwischen dem Dichtelement und den umgebenden Komponenten ist zur Erzeugung eines ausreichend hohen Drucks innerhalb des Materials eine Verringerung des Volumens des allseitig geschlossenen Raums erforderlich.

Nach der bevorzugten Ausführungsform der Erfindung ist der Druck innerhalb des Dichtkörpers größer gewählt als der maximale Druck des zu schaltenden Fluids im Durchflusskanal.

Nach einer Ausführungsform der Erfindung kann das Gehäuse zumindest zweiteilig ausgebildet sein, wobei in einem ersten Gehäuseteil eine Aufnahmeausnehmung für das Ventilsitzelement, das Führungselement und den Dichtkörper vorgesehen ist und wobei ein zweites Gehäuseteil mit dem ersten Gehäuseteil verbunden ist, welches das Dichtelement an der ihm zugewandten Stirnseite des allseitig geschlossenen Raums, der hier als Ringraum ausgebildet sein kann, bei der Montage des Ventils zur Erzeugung des gewünschten Drucks im Dichtkörper beaufschlagt.

Die Aufnahmeausnehmung im ersten Gehäuseteil kann zylindrisch, vorzugsweise kreiszylindrisch ausgebildet sein. Gleiches gilt auch für das Ventilsitzelement und das Führungselement, die eine vorzugsweise axial fluchtende, zylindrische Auβenwandung aufweisen können. Sind sowohl die Aufnahmeausnehmung als auch die aus Ventilsitzelement und Führungselement (mit darin vorgesehenem Schaltelement) bestehende Ventileinheit im Querschnitt kreiszylindrisch ausgebildet, so ergibt sich ein kreiszylindrischer Ringraum der durch den entsprechend einfach geformten Dichtkörper ausgefüllt werden kann.

Zum Abschließen des allseitig geschlossenen Raums an der betreffenden Stirnseite und zur Erzeugung des Drucks im Dichtkörper kann das zweite Gehäuseteil lösbar mit dem ersten Gehäuseteil verbunden sein, vorzugsweise durch Verschrauben. Das zweite Gehäuseteil kann hierzu einen Ringfortsatz aufweisen, welcher in den allseitig geschlossenen Raum eingreift, diesen schließt und den Dichtkörper beaufschlagt. Durch ein entsprechendes Gewinde am ersten und zweiten Gehäuseteil kann der gewünschte Druck im Gehäuse bzw. im Dichtkörper ohne Probleme und ohne großen Kraftaufwand erreicht und erforderlichenfalls auch feinfühlig eingestellt werden.

Nach einer Ausgestaltung der Erfindung kann das Führungselement eine Ausnehmung zur Aufnahme des Schaltelements aufweisen, welche so gestaltet ist, dass die axiale, vom Ventilsitz weg erfolgende Bewegung des Schaltelements in eine Geöffnet-Stellung des Ventils begrenzt wird. Hierzu kann das Führungselement an der dem Ventilsitz abgewandten Seite eine Öffnung in der betreffenden Wandung des Führungselements für den Durchtritt des Fluids aufweisen, wobei die dem Schaltelement zugewandte Innenwandung so ausgebildet ist, dass auch bei einem Anliegen des Schaltelements eine ausreichend große Öffnung für den Durchtritt des Fluids verbleibt.

Bei der Montage des Schaltventils kann das Volumen des allseitig geschlossenen Raums ausgehend von einem Ausgangszustand nach dem Einbringen und Abschließen des Raums durch eine plastische Verformung des den Raum umschließenden Bereichs des Gehäuses derart verringert sein, dass der vorbestimmte Druck innerhalb des Dichtkörpers erreicht ist.

Wie im Stand der Technik bekannt, kann auch das erfindungsgemäße Schaltventil als Doppelventil oder Mehrfachventil ausgebildet sein. Der Dichtkörper kann bei derartigen Ausführungsformen wenigstens eine weitere Ventileinheit umschließen, welche mit der ersten Ventileinheit fluchtet und welche einen Durchflusskanal bildet, welcher mit dem Durchflusskanal der ersten Ventileinheit fluidisch in Serie geschaltet ist.

Die wenigstens eine weitere Ventileinheit kann dabei identisch ausgebildet sein, wie die erste Ventileinheit. Die beiden Ventileinheiten können dabei axial unmittelbar aneinander anliegen, so dass der Dichtkörper, der auch die "Nahtstelle" zwischen den beiden Ventileinheiten umschließt, diese "Nahtstelle" abdichten kann. Gleichzeitig kann durch die radiale Beaufschlagung der Außenwandungen der beiden Ventileinheiten eine Fixierung in axialer Richtung erfolgen.

Selbstverständlich kann jedoch die wenigstens eine Ventileinheit innerhalb der Aufnahmeausnehmung des Gehäuses auch in axialer Richtung zusätzlich fixiert sein, vorzugsweise auch bereits bevor die Druckbeaufschlagung der Außenwandung in radialer Richtung durch den Dichtkörper erfolgt, um ein axiales Auseinanderbewegen der Ventileinheiten bzw. der betreffenden Komponenten zu vermeiden. Denn auf diese Weise könnten gegebenenfalls so große Spalte zwischen den axial benachbarten Komponenten der wenigstens einen Ventileinheit entstehen, die durch den Dichtkörper nicht mehr sicher geschlossen werden könnten bzw. die zu einer Zerstörung des Dichtkörpers führen würden.

Wie bereits vorstehend ausgeführt, kann das Schaltelement als Kugel ausgebildet sein, was zu einer sehr einfachen Konstruktion des Ventils führt.

Das Schaltelement oder das Ventilsitzelement können aus einem harten Material bestehen, vorzugsweise aus Rubin, Saphir oder einem keramischen Material wie AlO₂ oder ZrO₂.

Das Gehäuse des Ventils kann aus einem metallischen Material mit ausreichender Zugfestigkeit bestehen, vorzugsweise aus Edelstahl oder einer Titanlegierung.

Als Material für den Dichtkörper eignet sich insbesondere ein thermoplastischer Kunststoff, vorzugsweise ein Polyetheretherketon.(PEEK). Es ist aber beispielsweise auch möglich ein Polyethylen (PE) oder Polytetrafluorethylen (PTFE) Material zu verwenden.

Nach einer Ausführungsform der Erfindung kann die äußere Wandung des Gehäuses des Ventils in zumindest einem Teilbereich, in welchem sie den allseitig geschlossenen Raum begrenzt, durch die Wahl des Materials und/oder die geometrische Ausgestaltung derart elastisch oder plastisch deformierbar ausgebildet sein, dass ab einem vorbestimmten Druck im Dichtkörper, der Druck trotz einer weiteren Verkleinerung des allseitig geschlossenen Raums in einem Beaufschlagungsbereich, dadurch konstant gehalten oder der Druckanstieg dadurch verringert wird, dass durch die Deformation der Wandung das Gesamtvolumen des allseitig geschlossenen Raums im Wesentlichen konstant gehalten wird oder die Verringerung des Gesamtvolumens kleiner ist als die Verringerung des Volumens im Beaufschlagungsbereich.

Bei einem zweiteiligen Gehäuse kann dadurch erreicht werden, dass Toleranzen bei der Fertigung der Ventilkomponenten bei der Montage des Ventils nicht zu einem unzulässig hohen Druck im Dichtkörper führen, insbesondere bei Ausführungsformen, bei denen das zweite Gehäuseteil zur Fixierung von weiteren Ventilkomponenten im Gehäuse dient und dementsprechend bei der Montage in einer bestimmten Position mit dem ersten Gehäuseteil verbunden werden muss.

Weitere Ausführungsformen der Erfindung ergeben sich aus den Unteransprüchen.

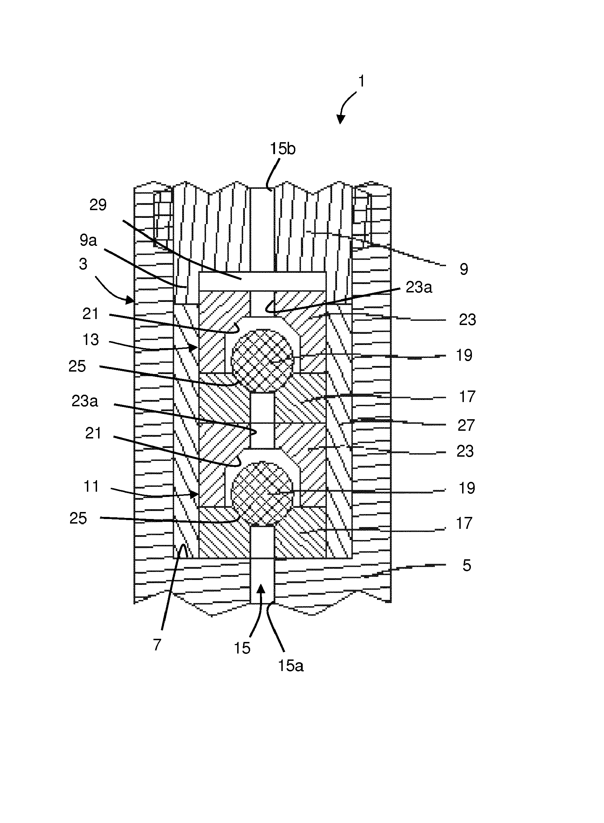

Die Erfindung wird nachstehend anhand eines in der Zeichnung dargestellten Ausführungsbeispiels näher erläutert.

Die einzige Figur zeigt einen schematischen Querschnitt durch eine Ausführungsform eines Schaltventils in Form eines Kugelrückschlagventils nach der Erfindung.

Das in der einzigen Figur in einem schematischen Längsschnitt dargestellte Rückschlagventil 1 kann als separate Baueinheit realisiert oder in einer weiteren, nicht näher dargestellten Gesamteinheit, wie einer Pumpe, integriert sein. Das Rückschlagventil 1 umfasst ein Gehäuse 3, welches zwei- oder mehrteilig ausgebildet sein kann. Ist das Ventil 1 in einer weiteren Baugruppe integriert, kann das Gehäuse 3 selbstverständlich auch integriert mit einem Gehäuse oder einer anderen Komponente der weiteren Baugruppe ausgebildet sein. Insbesondere kann das Gehäuse 3 integriert mit dem Pumpenkopf bzw. dem betreffenden Gehäuse oder Grundkörper des Pumpenkopfs einer HPLC Pumpe ausgebildet sein.

Bei dem in der Figur dargestellten Ausführungsbeispiel besteht das Gehäuse 3 aus einem ersten Gehäuseteil 5, das eine zylindrische Aufnahmeausnehmung 7 aufweist, in welcher die weiteren Komponenten des Rückschlagventils aufgenommen sind, und einem zweiten Gehäuseteil 9, welches mit dem ersten Gehäuseteil 5 verbunden ist und die Öffnung der Aufnahmeausnehmung 7 dicht verschließt. Hierzu kann, wie bei der in der Figur dargestellten Ausführungsform, in einem oberen Bereich der Innenwandung der Aufnahmeausnehmung 7 und einem Bereich der Außenwandung des zweiten Gehäuseteils 9, das zumindest in dem Bereich, der in die Aufnahmeausnehmung 7 eingreift, ebenfalls zylindrisch augebildet ist, jeweils ein Gewinde vorgesehen sein. Die beiden Gewinde ermöglichen eine lösbare Verbindung zwischen dem ersten und zweiten Gehäuseteil 5, 9. Selbstverständlich sind jedoch auch andere lösbare oder auch nicht lösbare Verbindungen zwischen den beiden Gehäuseteilen 5, 9 möglich, beispielsweise durch Verschweißen, Löten, Kleben oder Crimpen.

Bei den weiteren Komponenten des Ventils 1, die in der Aufnahmeausnehmung 7 aufgenommen sind, handelt es sich um eine erste Ventileinheit 11 und eine zweite, identisch ausgestaltete Ventileinheit 13.

Das Gehäuse 3 und die Ventileinheiten 11, 13 definieren einen Durchflusskanal 15 mit einer Zuführöffnung 15a im Boden des ersten Gehäuseteils 5 und einer Auslassöffnung 15b für das zu schaltende Fluid im zweiten Gehäuseteil 9. Bei dem in der Figur dargestellten Rückschlagventil handelt es sich um einen einzigen Pfad für das Fluid. Bei einem Mehrwegschaltventil, auf das das Prinzip der Erfindung ebenfalls anwendbar ist, kann es sich auch um mehrere verbundene Pfade handeln. Beispielsweise kann das Ventil so ausgestaltet sein, dass ein ankommender Fluidstrom wahlweise auf einen von mehreren weiteren Pfaden geschaltet wird.

Die grundlegenden Komponenten der Ventileinheiten 11, 13 des in der Figur dargestellten Kugel-Rückschlagventils sind jeweils ein Ventilsitzelement 17 und ein Schaltelement in Form einer Kugel 19, welche im Wesentlichen axial beweglich in einer Führungsausnehmung 21 eines Führungselements 23 aufgenommen ist. Das Ventilsitzelement jeder der Ventileinheiten 11, 13 ist im Wesentlichen kreisringförmig ausgebildet und weist an der koaxialen Öffnung eine Sitzfläche 25 auf, die komplementär zur Außenfläche der Kugel 19 ausgebildet ist, um eine Abdichtung in einer GESPERRT-Schaltposition des Ventils 1 zu gewährleisten.

Die GESPERRT-Schaltposition wird bei dem dargestellten Kugelrückschlagventil dann erreicht, wenn der Druck des Fluids im Durchflusskanal 15 in Bereichen oberhalb der Kugeln 19 bzw. in Bereichen jenseits der Sitzflächen 25 (d.h. in Richtung der Auslassöffnung 15b) größer ist als in Bereichen unterhalb des Sitzflächen (d.h. in Richtung der Zuführöffnung 15a). Die GEÖFFNET-Schaltposition wird bei umgekehrten Druckverhältnissen eingenommen, wobei die Kugeln 19 durch den resultierenden Fluidstrom in Flussrichtung, d.h. in Richtung der Auslassöffnung 15b bewegt werden, bis diese am Boden der Führungsausnehmung 21 des jeweiligen Führungselements 23 anschlagen.

Die Führungselemente 23 sind topfförmig ausbildet und weisen im Boden eine Durchlassöffnung 23a für den Durchtritt des Fluids auf. Das so gestaltete Führungselement 23 gewährleistet, dass sich die Kugel 19 nicht zu weit aus der GESPERRT-Schaltstellung bewegen kann und der Anbau weiterer Komponenten (in Durchflussrichtung) möglich ist. Der Boden ist innenseitig im Bereich der Durchlassöffnung 23a nicht rotationssymmetrisch ausgebildet, so dass die Kugel 19 zwar im Hub begrenzt wird, aber die Auslassöffnung 23a nicht verschließen kann.

Das Sitzelement 17 der Ventileinheiten 11, 13 kann beispielsweise aus Saphir und die Kugel 19 aus Rubin bestehen. AlO₂- und ZrO₂-Keramikmaterialen können ebenfalls für diese Komponenten verwendet werden. Das Führungselement 23 der Ventileinheiten 11, 13 kann beispielsweise aus einer AlO₂-Keramik bestehen.

Die doppelte Anordnung der Kugelrückschlagventileinheiten 11, 13 erhöht die Ausfallsicherheit des Ventils 1. Wird eine Ventileinheit 11, 13 undicht, so gewährleistet die jeweils andere Ventileinheit 13, 11 immer noch die Dichtheit des Ventils.

Wie in der Figur dargestellt, besitzen die Ventilsitzelemente 17 und die Führungselemente 23 jeweils eine Außenkontur, welche in axialer Richtung im Wesentlichen fluchten. Zwischen den koaxial in der Aufnahmeausnehmung 7 angeordneten Komponenten der Ventileinheiten 11, 13 und der Innenwandung der Aufnahmeausnehmung 7, d.h. im betreffenden Ringraum, ist ein Dichtkörper 27 angeordnet. Der Dichtkörper 27 weist vorzugsweise bereits im nicht mit Druck beaufschlagten Zustand eine komplementäre (hier hülsenförmige) Gestalt auf. Die axiale Gesamtlänge des Dichtkörpers 27 entspricht vorzugsweise in etwa der axialen Ausdehnung der beiden Ventileinheiten 11, 13. Zumindest sollten die Gesamtlänge und die Position des Dichtkörpers 27 jedoch so beschaffen sein, dass alle abzudichtenden Öffnungen und Spalte (siehe unten) vom Dichtkörper 27 abgedeckt sind (und der der Ringraum um den Dichtkörper 27 geschlossen ist).

An dieser Stelle sei bemerkt, dass der Begriff "Ringraum" in der vorliegenden Beschreibung ganz allgemein für einen Raum verwendet wird, welcher zwischen einer beliebig geformten Außenwandung und einer beliebig geformten Innenwandung liegt und welcher boden- und deckelseitig zu einem allseitig geschlossenen Ringraum geschlossen werden kann.

Zur Montage des Ventils kann zunächst eine Einheit bestehend aus den Ventileinheiten 11, 13 und der darüber geschobenen Hülse des Dichtkörpers 27 hergestellt werden. Die gesamte Einheit kann dann in die Aufnahmeausnehmung 7 des ersten Gehäuseteils 5 eingeschoben werden. Anschließend kann von oben das zweite Gehäuseteil 9 mit dem ersten Gehäuseteil 5 verbunden (bei der dargestellten Ausführungsform eingeschraubt) werden.

Das zweite Gehäuseteil 9 weist an dem in die Aufnahmeausnehmung 7 eingreifenden Bereich einen ringförmigen Fortsatz 9a auf, der in den oberen Bereich des Ringraums zwischen der Ventileinheit 13 und der Aufnahmeausnehmung 7 eingreift und diese im Wesentlichen (bis auf einen zulässigen Spalt) verschließt. Der Ringraum, in welchem der Dichtkörper 27 aufgenommen ist, ist somit allseitig geschlossen (bis auf zulässige Spalte).

Das zweite Gehäuseteil 9 wird mit dem ringförmigen Fortsatz 9a so weit in die Aufnahmeausnehmung 7 des ersten Gehäuseteils eingesetzt, dass der Dichtkörper 27 unter einen vorbestimmten Druck gesetzt wird. Unter diesem Druck verformt sich das plastisch und/oder elastisch verformbare Material des Dichtkörpers 27 und füllt den gesamten Ringraum vollständig aus. Das Material verschließt dabei auch kleine Spalte oder Öffnungen zwischen den Ventilkomponenten untereinander bzw. zwischen den Ventilkomponenten und den Gehäuseteilen 5, 9. Hierdurch erfolgt zum einen eine vollständige Abdichtung des Ringraums und damit auch des Durchflusskanals 15 gegenüber dem Gehäuse 3. Durch den praktisch vollständigen Abschluss des Ringraums kann das Material an keiner Stelle extrudieren, auch wenn der Druck im Material weit über dessen Fließgrenze liegt. Zum anderen erzeugt der unter Druck stehende Dichtkörper 27 gleichzeitig eine radiale Vorspannung der Ventilsitzelemente 17 und Führungselemente 23. Da insbesondere die Ventilsitzelemente 17 aus einem harten Material bestehen, welches nur relativ geringe Zugspannungen, jedoch hohe Druckspannungen aufnehmen kann, ohne dass eine Zerstörung auftritt, muss die Vorspannung zumindest so groß gewählt werden, dass bei einem gegebenen Maximaldruck für das Fluid im betreffenden Element nur solche (azimutalen bzw. tangentialen) Druckspannungen erzeugt werden, die unterhalb der Grenze liegen, ab der eine Zerstörung des Elements erfolgen würde. Sicherheitshalber wird man in der Praxis selbstverständlich eine ausreichende Sicherheitsmarge vorsehen. Da es sich jedoch aus Gründen der Dichtigkeit empfiehlt, den Druck im Dichtkörper 27 größer als den Druck des Fluids zu wählen, um die Dichtigkeit des Ventils 1 zu gewährleisten, ist in diesem Fall ohnehin gewährleistet, dass die maximal entstehenden Zugspannungen unterhalb der Zerstörungsgrenze liegen.

Diese Vorspannung reduziert auch die Zugspannungen, die bei geschlossenem Ventil durch den Druck der Kugel 19 auf die Sitzfläche 25 des Ventilsitzelements 17 erzeugt werden. Da harte Materialien, wie Saphir, Rubin oder Keramikmaterialien sehr druckfest sind, wird man daher den Druck der Vorspannung nicht nur so hoch wählen, dass der Druck der des Fluids im Durchflusskanal 15 kompensiert wird, sondern zusätzlich auch die durch das Anliegen des Schaltelements 19 am Ventilsitz erzeugten radialen Kräfte, die zu einem Aufweiten des Ventilsitzelements und damit zu dessen Zerstörung infolge der entstehenden azimutalen bzw. tangentialen Zugspannungen führen würden.

Geeignete Materialien für das Gehäuse 3 bzw. die Gehäuseteile 5, 9 sind zugfeste Metalle oder Metalllegierungen, insbesondere Edelstahl oder Titanlegierungen.

Ein Ventil 1 mit einer derartigen Konstruktion weist somit den Vorteil auf, dass die nachteiligen mechanischen Eigenschaften von Materialien für die Ventilkomponenten, wie Saphir, Rubin oder Keramik, die zwar eine gewünschte große Härte und Druckfestigkeit aber nur eine geringe Zugfestigkeit, und die nachteiligen Eigenschaften des Materials für das oder die Dichtelemente, wie beispielsweise thermoplastische Materialien wie PEEK, die einerseits ausreichend flexibel sein müssen, um abdichtend wirken zu können, andererseits jedoch unter hohen Drücken (ohne eine allseitige Begrenzung) zerstört würden, kompensiert werden.

Da die Abdichtung des Ventils 1 mittels des ringförmigen Dichtkörpers 27 nur einen kleinen ringförmigen Querschnitt (d.h. eine geringe Wandstärke des Dichtkörpers 7) benötigt, kann mit einer verhältnismäßig kleinen Kraft, die auf die entsprechend kleine Stirnfläche des Dichtkörpers 27 mittels des zweiten Gehäuseteils 9 ausgeübt wird, ein sehr hoher Druck im Dichtkörper 27 erzeugt werden.

Anstatt die Vorspannung des Dichtkörpers 27 durch das Aufsetzen (vorzugsweise Verschrauben des zweiten Gehäuseteils 9 mit dem ersten Gehäuseteil 5) zu erzeugen, kann auch (oder zusätzlich) die Wandung des hohlzylindrischen Bereichs des ersten Gehäuseteils 5 im Bereich des Dichtkörpers 27 plastisch so verformt werden, dass das Volumen des Ringraums, in welchem sich der Dichtkörper 27 befindet, verringert wird und sich dementsprechend der gewünschte Druck im Dichtkörper 27 aufbaut. Die Verformung der Wandung kann beispielsweise durch Crimpen der metallischen Wandung erfolgen.

Selbstverständlich sind eine ganze Reihe von Varianten der dargestellten Ausführungsform möglich. Beispielsweise kann das Sitzelement 17 einstückig mit dem Führungselement 23 ausgebildet sein. Der Anschlag für das Schaltelement bzw. die Kugel 19 kann im Fall eines Doppel- oder Mehrfachrückschlagventils dann durch das jeweils (in Strömungsrichtung) nachfolgende bzw. darüber angeordnete Sitzelement 17 gebildet werden. Im Fall der in Strömungsrichtung letzten Ventileinheit kann der Anschlag durch das zweite Gehäuseteil 9 gebildet sein. Das Gehäuseteil 5 kann in diesem Fall auch einstückig mit dem Führungselement ausgebildet sein und unmittelbar oder zumindest ausreichend nahe an das betreffende Sitzelement heranreichen.

Bei dem in der Figur dargestellten Ausführungsbeispiel ist zwischen dem zweiten Gehäuseteil 9 und dem obersten (d.h. dem zweiten Gehäuseteil 9 axial benachbarten) Führungselement 23 ein Freiraum gegeben, der als Totvolumen 29 wirkt. Da Totvolumina bei bestimmten Anwendungen unerwünscht sind, kann das dem zweiten Gehäuseteil 9 axial benachbarte Führungselement 23 auch von der einwärts gerichteten Stirnseite des zweiten Gehäuseteils 9 beaufschlagt werden, so dass das Totvolumen 29 minimiert bzw. vollständig eliminiert wird. Das zweite Gehäuseteil 9 kann hierzu entsprechend dicker (als in der Figur dargestellt) ausgebildet sein oder - durch ein sich über eine größere axiale Länge vorgesehenes Gewinde im ersten Gehäuseteil 5 - weiter in das erste Gehäuseteil 5 einschraubbar ausgeführt sein. Bei der Montage des Ventils 1 wird dann das zweite Gehäuseteil 9 so weit in das erste Gehäuseteil eingeschraubt, bis es das benachbarte Führungselement 23 beaufschlagt. Gleichzeitig wird selbstverständlich auch der Dichtkörper 27 komprimiert.

Nach einer weiteren Ausführungsform kann die äußere Wandung des Gehäuses (bei der in der Figur dargestellten Variante die Wandung des ersten Gehäuseteils 5) des Ventils, welche den allseitig geschlossenen Raum, in dem sich der Dichtkörper befindet, begrenzt, so ausgebildet sein, dass er im gesamten begrenzenden Bereich oder in einem Teil davon elastisch oder plastisch verformbar ist. Die Eigenschaft des Gehäuses im Bereich dieser Wandung ist dabei vorzugsweise so ausgebildet, dass ab einem vorbestimmten Druck trotz einer weiteren Verkleinerung des Raums im Bereich der Beaufschlagung mit dem zweiten Gehäuseteil (bei der in der Figur dargestellten Variante ist dies das Gehäuseteil 9) das Volumen insgesamt dadurch konstant gehalten wird, dass die Wandung an einer anderen Stelle oder in einem anderen Bereich in entsprechender Weise plastisch deformiert wird. Beispielsweise kann bei der in der Figur dargestellten Ausführungsform die den Ringraum begrenzende Wandung hinsichtlich des Materials und der Geometrie so beschaffen sein, dass sich die Wandung in diesem Bereich definiert (und in gewünschter Weise) "ausbeult". Auf diese Weise kann erreicht werden, dass der Druck im Dichtkörper ab einer gewissen Schwelle auf einem vorgegebenen Wert (annähernd) konstant gehalten wird. Auch wenn es nicht gelingen sollte, das Volumen des allseitig geschlossenen Raums und den Druck im Dichtkörper ab einer vorgegebenen Schwelle exakt konstant zu halten, kann damit zumindest erreicht werden, dass der Druckanstieg ab einem gewissen Schwellwert geringer ausfällt als bei einer Wandung ohne die Eigenschaft einer plastischen Deformierbarkeit.

Bei einer deratigen Ausführungsform kann beispielsweise das in der Figur dargestellte zweite Gehäuseteil 9 so weit in das erste Gehäuseteil 5 eingeschraubt werden, bis es mit seiner Stirnseite das betreffende Führungselement 23 beaufschlagt und im Gehäuse fixiert. Der ringförmige Fortsatz 9a des zweiten Gehäuseteils bewirkt also bei einem Einschrauben des zweiten Gehäuseteils 9 in das erste Gehäuseteil 5 ab einer gewissen Position und damit ab einem gewissen Druck im Dichtkörper 27 zwar weiterhin eine Verringerung des Volumens des allseitig geschlossenen Raums (des Ringraums bei der in der Figur dargestellten Ausführungsform), jedoch wird hierdurch das Gesamtvolumen des allseitig geschlossenen Raums nicht mehr oder nicht mehr in diesem Maß verringert, da sich die Wandung des Gehäuses 3 bzw. des ersten Gehäuseteil 5 deformiert und in diesem Bereich eine Volumenzunahme erzeugt.

Damit kann das Totvolumen zwischen dem zweiten Gehäuseteile 9 und dem Führungselement 23 eliminiert werden, ohne dass Fertigungstoleranzen zu nicht tolerierbaren Druckanstiegen im Dichtkörper 27 führen.

Obwohl die Erfindung vorstehend nur anhand des in der Figur dargestellten Rückschlagventils erläutert wird, bezieht sich die Erfindung auch auf alle möglichen Ausführungsformen von Ventilen, bei denen die erfindungsgemäße Art und Weise der Abdichtung und Vorspannung der Komponenten einer beliebig ausgestalteten Ventileinheit verwendet wird. Beispielsweise kann das Schaltelement eines erfindungsgemäßen Schaltventils auch so ausgebildet sein, dass es aktiv (manuell oder von einer ansteuerbaren Betätigungseinheit) zwischen zwei oder mehreren Schaltpositionen bewegbar ist.

### Bezugszeichenliste

- 1: Rückschlagventil
- 3: Gehäuse
- 5: erstes Gehäuseteil
- 7: zylindrische Aufnahmeausnehmung
- 9: zweites Gehäuseteil
- 9a: Ringfortsatz
- 11: erste Ventileinheit
- 13: zweite Ventileinheit
- 15: Durchflusskanal
- 15a: Zuführöffnung
- 15b: Auslassöffnung
- 17: Ventilsitzelement
- 19: Ventilschaltelement, Kugel
- 21: Führungsausnehmung
- 23: Führungselement
- 23a: Durchlassöffnung
- 25: Sitzfläche
- 27: Dichtkörper
- 29: Totvolumen

## Patentansprüche

1. Schaltventil, insbesondere für das Schalten eines unter hohem Druck stehenden Fluids,
(a) mit wenigstens einer Ventileinheit (11, 13), welche ein Ventilsitzelement (17) und ein in einem Führungselement (23) beweglich geführtes Schaltelement (19) umfasst, wobei das Ventilsitzelement (17) und das Schaltelement (19) zur Realisierung einer Schaltventilfunktion zusammenwirken,
(b) wobei das Ventilsitzelement (17) und das Führungselement (23) in einem Gehäuse (3) vorgesehen sind und wobei das Ventilsitzelement (17), das Führungselement (23) und das Gehäuse (3) einen Durchflusskanal (15) für das zu schaltende Fluid bilden,
**dadurch gekennzeichnet,**
(c) **dass** in einem allseitig geschlossenen Raum zwischen der Innenwandung des Gehäuses (3) und den Außenwandungen des Ventilsitzelements (17) und des Führungselements (23) ein elastisch und/oder plastisch verformbarer Dichtkörper (27) vorgesehen ist, welcher unter einem vorbestimmten Druck steht und so den Durchflusskanal (15) gegenüber dem Gehäuse (5) abdichtet und das Ventilsitzelement (17) und das Führungselement (23) mit einer einwärts gerichteten Vorspannung beaufschlagt.

2. Schaltventil nach Anspruch 1, **dadurch gekennzeichnet, dass** der im Dichtkörper (27) bestehende Druck größer ist als der maximale Druck des zu schaltenden Fluids im Durchflusskanal (15).

3. Schaltventil nach Anspruch 1 oder 2, **dadurch gekennzeichnet, dass** das Gehäuse (3) zumindest zweiteilig ausgebildet ist, dass in einem ersten Gehäuseteil (5) eine Aufnahmeausnehmung (7) für das Ventilsitzelement (17), das Führungselement (23) und den Dichtkörper (27) vorgesehen ist und dass ein zweites Gehäuseteil (9) mit dem ersten Gehäuseteil (5) verbunden ist, welches den Dichtkörper (27) an der ihm zugewandten Stirnseite des Ringraums beaufschlagt.

4. Schaltventil nach Anspruch 3, **dadurch gekennzeichnet, dass** die Aufnahmeausnehmung (7) im ersten Gehäuseteil (5) zylindrisch, vorzugsweise kreiszylindrisch ausgebildet ist und dass das Ventilsitzelement (17) und das Führungselement (23) eine vorzugsweise axial fluchtende, zylindrische Auβenwandung aufweisen.

5. Schaltventil nach Anspruch 3 oder 4, **dadurch gekennzeichnet, dass** das zweite Gehäuseteil (9) lösbar mit dem ersten Gehäuseteil (5) verbunden ist, vorzugsweise durch Verschrauben, und dass das zweite Gehäuseteil (9) einen Ringfortsatz (9a) aufweist, welcher zur Beaufschlagung des Dichtkörpers (27) in den Ringraum eingreift und diesen schließt.

6. Schaltventil nach einem der vorhergehenden Ansprüche, **dadurch gekennzeichnet, dass** das Führungselement (23) eine Ausnehmung (21) zur Aufnahme des Schaltelements (19) aufweist, welche so gestaltet ist, dass die axiale, vom Ventilsitz weg erfolgende Bewegung des Schaltelements (19) in eine GEÖFFNET-Stellung des Ventils (1) begrenzt wird.

7. Schaltventil nach einem der vorhergehenden Ansprüche, **dadurch gekennzeichnet, dass** das Volumen des allseitig geschlossenen Raums ausgehend von einem Ausgangszustand nach dem Einbringen und Abschließen des allseitig geschlossenen Raums durch eine plastische Verformung des den allseitig geschlossenen Raum umschließenden Bereichs des Gehäuses (3) derart verringert ist, dass der vorbestimmte Druck innerhalb des Dichtkörpers (27) erreicht ist.

8. Schaltventil nach einem der vorhergehenden Ansprüche, **dadurch gekennzeichnet, dass** der Dichtkörper (27) wenigstens eine weitere Ventileinheit (13) umschließt, welche mit der ersten Ventileinheit (11) fluchtet und welche einen Durchflusskanal bildet, welcher mit dem Durchflusskanal der ersten Ventileinheit (11) fluidisch in Serie geschaltet ist.

9. Schaltventil nach Anspruch 8, **dadurch gekennzeichnet, dass** die wenigstens eine weitere Ventileinheit (13) identisch ausgebildet ist wie die erste Ventileinheit (11) und dass die Ventileinheiten (11, 13) axial unmittelbar aneinander anliegen.

10. Schaltventil nach einem der vorhergehenden Ansprüche, **dadurch gekennzeichnet, dass** das Schaltelement (19) aus einem harten Material besteht, vorzugsweise aus Rubin, Saphir oder einem keramischen Material wie AlO₂ oder ZrO₂.

11. Schaltventil nach einem der vorhergehenden Ansprüche, **dadurch gekennzeichnet, dass** das Ventilsitzelement (17) aus einem harten Material besteht, vorzugsweise aus Rubin, Saphir oder einem keramischen Material wie AlO₂ oder ZrO₂.

12. Schaltventil nach einem der vorhergehenden Ansprüche, **dadurch gekennzeichnet, dass** das Gehäuse (3) aus einem metallischen Material besteht, vorzugsweise aus Edelstahl oder einer Titanlegierung.

13. Schaltventil nach einem der vorhergehenden Ansprüche, **dadurch gekennzeichnet, dass** der Dichtkörper (27) aus einem thermoplastischen Kunststoff besteht, vorzugsweise aus Polyetheretherketon (PEEK).

14. Schaltventil nach einem der vorhergehenden Ansprüche, **dadurch gekennzeichnet, dass** das Ventil als Rückschlagventil ausgebildet ist und dass das Schaltelement (19) vorzugsweise als Kugel ausgebildet ist..

15. Schaltventil nach einem der vorhergehenden Ansprüche, **dadurch gekennzeichnet, dass** die äußere Wandung des Gehäuses (3) des Ventils (1) in zumindest einem Teilbereich, in welchem sie den allseitig geschlossenen Raum begrenzt, durch die Wahl des Materials und/oder die geometrische Ausgestaltung derart elastisch oder plastisch deformierbar ausgebildet ist, dass ab einem vorbestimmten Druck der Druck im Dichtkörper, trotz einer weiteren Verkleinerung des allseitig geschlossenen Raums in einem Beaufschlagungsbereich, dadurch konstant gehalten oder der Druckanstieg dadurch verringert wird, dass durch die Deformation der Wandung das Gesamtvolumen des allseitig geschlossenen Raums im Wesentlichen konstant gehalten wird oder die Verringerung des Gesamtvolumens kleiner ist als die Verringerung des Volumens im Beaufschlagungsbereich.
